# EUROPÄISCHE PATENTSCHRIFT

(11) **EP 0 750 721 B1**
(45) Veröffentlichungstag und Bekanntmachung des Hinweises auf die Patenterteilung: **02.06.1999**
(21) Anmeldenummer: 95911147.7
(22) Anmeldetag: 17.03.1995
(51) Int. Cl.: F16B 5/00, F16B 12/26

(54) **VERBINDUNGSELEMENT**
CONNECTION ELEMENT
RACCORD

(30) Priorität: 18.03.1994 DE 9404642 U
(43) Veröffentlichungstag der Anmeldung: 02.01.1997
(73) Patentinhaber: FRIEDRICH KNAPP GESELLSCHAFT M.B.H., A-3300 Amstetten (AT)
(72) Erfinder: KNAPP, Friedrich, A-3300 Amstetten (AT)
(74) Vertreter: Weinzinger, Arnulf, Dipl.-Ing.
(86) Internationale Anmeldenummer: AT9500052
(87) Internationale Veröffentlichungsnummer: WO9525898

(56) Entgegenhaltungen:
- EP-A- 0 053 233
- WO-A-83/01476
- FR-A- 2 163 787
- FR-A- 2 209 024
- FR-A- 2 304 808
- US-A- 4 701 066

## Beschreibung

Die Erfindung bezieht sich auf ein Verbindungselement zum Verbinden von vorzugsweise Holz oder Materialien mit ähnlichen mechanischen Eigenschaften. Die zu verbindenden Bauteile können lösbar oder unlösbar miteinander verbunden werden.

Aus dem Stand der Technik sind Verbindungselemente im Bereich der Möbelfertigung hinreichend bekannt. So werden z.B. die zu verbindenden Teile mit Grundlochbohrungen versehen, in die als Verbindungselemente Holzdübel eingesetzt werden. Bei unlösbaren Verbindungen wird zusätzlich eine Verleimung durchgeführt. Weiterhin bekannt sind Verbindungen, bei denen schwalbenschwanzförmig genutete Bauteile mit dazu passenden Einschubabschnitten miteinander verbunden werden.

Diese und ähnlich wirkende Verbindungselemente nach dem Stand der Technik weisen eine Reihe von Nachteilen auf. Bei den lösbaren Verbindungen ist nach mehrfachem Lösen bzw. Verbinden mit einer Verschlechterung der Paßgenauigkeit zu rechnen; gleichfalls verringert sich die Auszugskraft, d.h. die Kraft, die zum Lösen der Verbindung erforderlich ist. Bei den unlösbaren Verbindungen müssen die Teile bis zum Abbinden des eingesetzten Klebstoffes unter einem äußeren mechanischen Druck gehalten werden. Dieser Druck wird im allgemeinen durch Spannvorrichtungen erzeugt. Diese Spannvorrichtungen (z.B. Schraubzwingen) sind in ihrer Handhabung sehr aufwendig und daher für eine Serien-Produktionsfertigung wenig geeignet.

Aus der US 4 701 066 A ist ein Verbindungselement der im einleitenden Teil von Anspruch 1 angegebenen Art bekannt; im einzelnen gehen bei dem bekannten, winkelförmig ausgebildeten Verbindungselement vom hier als Steg bezeichneten Winkelbereich Schenkelpaare aus, deren Schenkel beim Einsetzen in Nuten von zu verbindenden Bauteilen elastisch zueinander verbiegbar sind. Die Außenseiten der Schenkel jedes Paares sind jedoch im entspannten Zustand allgemein parallel zueinander, und sie sind mit einer Zahnung versehen, die mit einer korrespondierenden Zahnung in der Nut, insbesondere in einem in diese eingesetzten gesonderten Kupplungsteil, im Sinne einer formschlüssigen Verbindung zusammenwirkt.

Es ist Aufgabe der Erfindung, ein Verbindungselement zu schaffen, das sowohl für eine lösbare als auch für eine unlösbare Verbindung eingesetzt werden kann, wobei die lösbare Verbindung ein häufiges Lösen gewährleisten soll, ohne daß die Paßgenauigkeit oder die Ausziehkraft wesentlich verringert wird, und die Herstellung einer unlösbaren Verbindung auch ohne äußere Spanneinrichtungen möglich ist.

Die Aufgabe wird durch die Merkmale des Anspruchs 1 und einer Verbindung nach Anspruch 21 gelöst.

Das Verbindungselement wird in eine sich einwärts erweiternde Nut eingedrückt oder seitlich eingeschoben. Vorzugsweise können die Nutoberkanten auch eine Anfasung aufweisen. Somit ist gewährleistet, daß das Verbindungselement, bedingt durch seine Federeigenschaft, in die Nut einrastet. Das Verbindungselement ist zur Nut so dimensioniert, daß nach dem Einrasten das Verbindungselement nicht mehr seine ursprüngliche Gestalt einnehmen kann und somit durch die verbleibende mechanische Federspannung neben einem Formschluß auch ein Kraftschluß zwischen dem Verbindungselement und dem zu verbindenden Teil entsteht. Sollen zwei Teile miteinander verbunden werden, sind die Nuten bezogen auf die Größe und Form des Verbindungselementes so dimensioniert, daß die Federspannung des Verbindungselementes ein Zusammenziehen der zu verbindenden Teile bewirkt.

Ist eine lösbare Verbindung vorgesehen, gleicht die Federwirkung des Verbindungselementes sowohl Fertigungstoleranzen der Nut als auch Aufweitungen der Nut aus, die beim häufigen Lösen und Schließen der Verbindung entstehen.

Bei einer unlösbaren Verbindung werden die zu verbindenden Flächen zusätzlich mit einem Klebemittel versehen. Bedingt durch die Federwirkung des Verbindungselementes werden die zu verbindenden Flächen auch ohne äußere Spannvorrichtung gegeneinander gepreßt.

Vorteilhafte Weiterbildungen der Erfindung sind Gegenstand der Unteransprüche. So kann ein speziell gestaltetes Strangpreßprofil eingesetzt werden, wobei die elastischen Schenkel pfeilspitzenförmige Enden mit jeweils einer als Widerhaken wirkenden Kante und jeweils eine Gleit- oder Führungsflanke aufweisen.

Weiterhin kann zur Erhöhung der elastischen Eigenschaften der Schenkel eine gelenkartig wirkende Aussparung vorgesehen werden. Eine Verbesserung der Positioniergenauigkeit des Verbindungselementes in der Nut wird durch Justieranschläge erreicht, die vorzugsweise an der Anfasung der Nut anliegen. Zur Erhöhung der Auszugskraft kann zusätzlich ein Blockiermittel zwischen die elastischen Schenkel des Verbindungselementes eingebracht sein. Dieses Blockiermittel kann sowohl aus einem der Form des Zwischenraumes angepaßtem Profilmaterial als auch aus einem Schaumstoff oder einer Federleiste bestehen. Das Verbindungselement kann mit Fixierelementen versehen sein. Diese Fixierelemente können als Klebe- bzw. Schraubplatte, Gewindestift oder Nagelstift ausgebildet sein. Die Verbindung kann auch durch eine Doppel-Schlitz- Nut hergestellt sein. Bei größeren Abmessungen des als Strangpreßprofil ausgebildeten Verbindungsmittels können Aussparungen im Querschnittsprofil des Verbindungselementes zur Materialreduzierung vorgesehen werden.

Die Erfindung wird nachstehend anhand von bevorzugten Ausführungsbeispielen, auf die sie jedoch nicht beschränkt sein soll, und unter Bezugnahme auf die Zeichnung noch weiter erläutert. Es zeigen:
Fig.1 ein in eine Nut eingesetztes Verbindungselement aus Federstahlelementen in Ansicht;
Fig.2 in schaubildlicher Darstellung ein Verbindungselement aus einem Strangpreßprofil;
Fig.3 das Verbindungselement aus einem Strangpreßprofil in Funktion,
Fig.4 in einer Ansicht ein Verbindungselement entsprechend Fig.2 und 3 sowie eine Schwalbenschwanz-Nut mit einer Anfasung;
Fig.5 in einer Ansicht ein Verbindungselement in Position zusammen mit einem Blockiermittel;
Fig.6 eine Ansicht eines Verbindungselements mit Justieranschlägen;
Fig.7 eine schaubildliche Darstellung eines Verbindungselements mit einer Fixier-Platte;
Fig.8 eine Verbindung von Bauteilen mit einer Doppelschlitz-Nut; und
Fig.9 in einer Ansicht ein Verbindungselement mit Ausnehmungen zur Materialreduzierung.

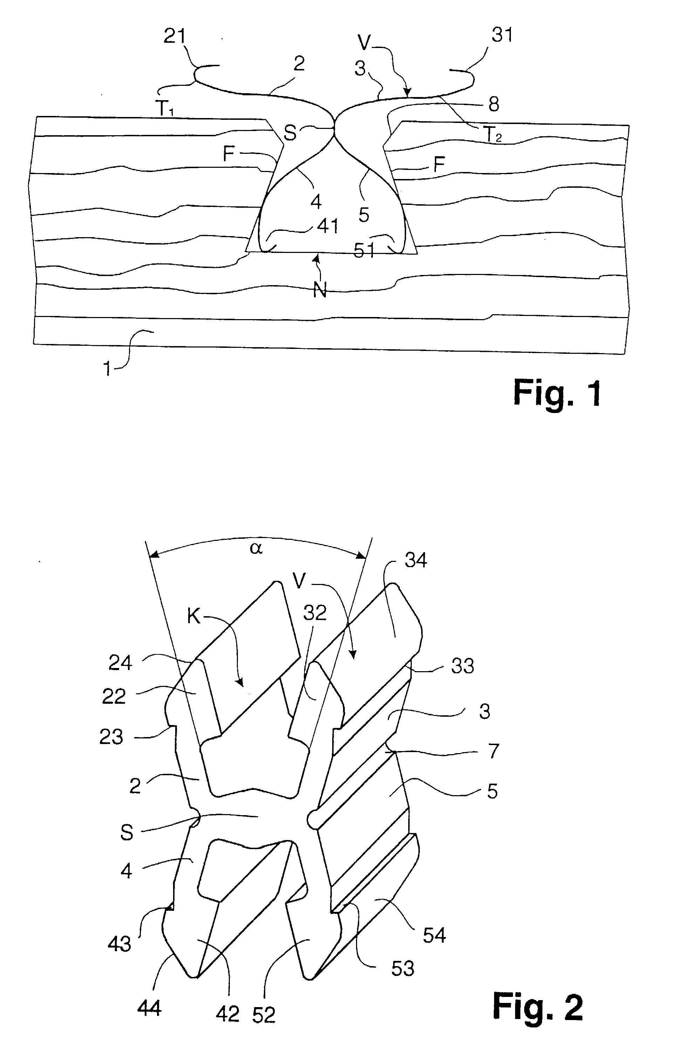

Die Fig.1 zeigt ein Bauteil 1 aus Holz, in das eine schwalbenschwanzförmig hinterschnittene Nut N eingearbeitet ist, deren Flanken F an der offen Seite eine Anfasung 8 aufweisen. Zum Einfügen in diese Nut N ist ein Verbindungselement V vorgesehen, das aus Federstahlelementen aus zwei miteinander rollverschweißten Teilen T1, T2 besteht, die zu einem x-förmig gestalteten Element verbunden sind, so daß gegenüber dem durch die Rollverschweißung gebildeten Steg S zwei Paare von miteinander zusammenwirkenden parallelen Schenkeln 2,3;4,5 entstehen, die jeweils V-förmig gespreizt und durch elastisches Zusammendrücken jeweils in eine zugehörige Nut N einführbar sind. In ihrer Endlage im montierten Zustand liegen die Schenkel 2,3;4,5 unter elastischer Vorspannung an den Flanken F der Nut N an.

Beim Eindrücken eines Schenkelpaares, hier der Schenkel 4, 5 in die Nut N dient die Anfasung 8 zur Führung und zur Erleichterung des Eindrückens in die Nut N. Behilflich sind hierbei auch die an den Enden der Schenkel 2,3;4,5 vorgesehenen Abwinkelungen 21,31; 41,51, die darüber hinaus dafür sorgen, daß die Nutflanken F nicht durch die scharfkantigen Enden der Schenkel 2,3;4,5 beschädigt werden. Die der gezeigten Nut N gegenüberliegenden Schenkel 2, 3 werden in eine entsprechende Nut eines mit dem Bauteil 1 zu verbindenden weiteren Bauteils (in Fig.1 nicht gezeigt) eingesetzt, wobei unter der Vorspannkraft der elastisch verformten Schenkel 2, 3 und der schrägen Flanken der zugehörigen Nut die Bauteile 1 eng aneinandergezogen werden.

Ein solches Verbindungselement V kann in die offene Nut eines Bauteils von der Seite des Öffnungsschnitts mit der Anfasung 8 (also gemäß der Darstellung in Fig.1 von oben) eingedrückt werden. Es ist aber auch möglich, das Verbindungselement V von der Stirnseite der Nut N in Längsrichtung der Nut N in diese einzuschieben, was zum Beispiel dann sinnvoll sein kann, wenn die Bauteile zuvor in irgendeiner Form zusammengestellt worden sind und die Seite des Öffnungsschnitts der Nut nicht mehr frei zugänglich ist.

Die Fig.2 zeigt eine andere, derzeit besonders bevorzugte Ausführung des Verbindungselements V, das sich von derjenigen nach Fig.1 dadurch unterscheidet, daß es sich um einen Abschnitt eines aus Kunststoff gepreßten Strangpreßprofils handelt.

Im vorliegenden Fall sind für die einander entsprechenden Teile dieselben Bezugszeichen verwendet worden wie in Fig.1. Im Falle dieses Strangpreßprofils gemäß Fig.2 gehen von einem mittleren Steg S nach entgegengesetzten Seiten zwei Schenkelpaare 2,3;4,5 weg, wobei sich zwangsläufig mit Rücksicht auf die geringere Festigkeit von Kunststoff gegenüber Federstahl größere Wandstärken ergeben. Der Elastizitätsmodul des Kunststoffes sollte mindestens das 0,2-fache von Stahl erreichen. Der Steg S bildet zusammen mit den jeweiligen Schenkeln eine allgemein U-förmige Kehle K, wobei die Schenkel 2 und 3 bzw. 4 und 5 in einem Winkel a zueinander stehen, so daß sich die Kehle nach außen zu den Schenkelenden V-förmig erweitert. Die freien Enden der Schenkel 2, 3, 4, 5 bilden pfeilförmige Spitzen 22,32,42,52, die gegenüber dem Schenkelquerschnitt im Bereich nahe dem Steg S einen sowohl nach innen in die Kehle K als auch nach außen unterschiedlich verdickten Querschnitt haben und die auf der Außenseite eine Art Widerhakenkante 23, 33, 43, 53 bilden, an die sich Gleit- oder Führungsflanken 24, 34, 44, 54 anschließen. Im Bereich des Steges S ist an der Außenseite des Verbindungselements V über die Länge dieses Verbindungselements V auf beiden Seiten je eine Aussparung 7 vorgesehen, die den Querschnitt des benachbarten Schenkels 2, 3, 4 bzw. 5 an seiner Wurzel im Übergang zum Steg S soweit schwächt, daß eine elastische Verformung beim Zusammendrücken der Schenkel für das Einpressen in eine Nut N möglich ist.

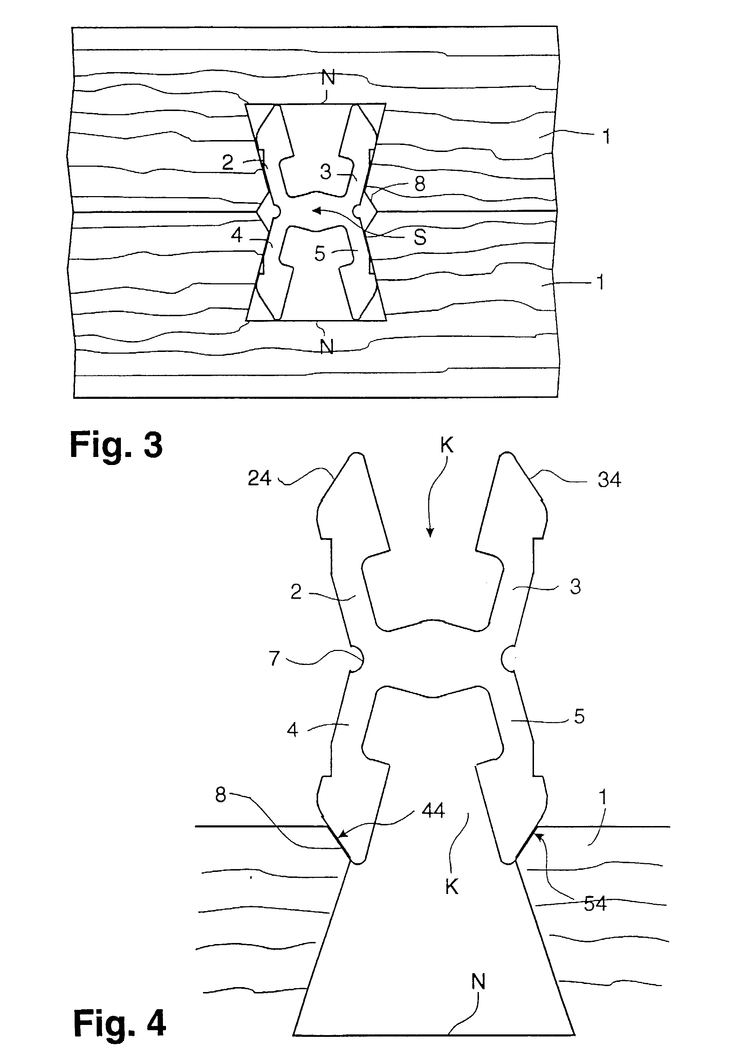

Die Fig.3 zeigt dieses Verbindungselement V nach Fig.2 in seiner Funktion zur Verbindung zweier Bauteile 1, 1. Das Einsetzen dieses Verbindungselements V erfolgt in der gleichen Weise wie anhand der Fig.1 beschrieben wurde. Aus Fig.3 ist zu erkennen, wie die beiden Schenkelpaare 2, 3, 4, 5 dieses Verbindungselements V zusammenwirken, um die zwei Bauteile 1, 1 zusammenzuhalten.

Die Fig.4 verdeutlicht, wie beim Einpressen eines Schenkelpaares 4, 5 in eine Nut N die Gleitflanken oder -flächen 44, 54 der Schenkel 4,5 in Verbindung mit der Anfasung 8 elastisch zusammenwirken, so daß sie sich nach Passieren der engsten Stelle der Nut N wieder elastisch aufspreizen und in die Nut N einschnappen.

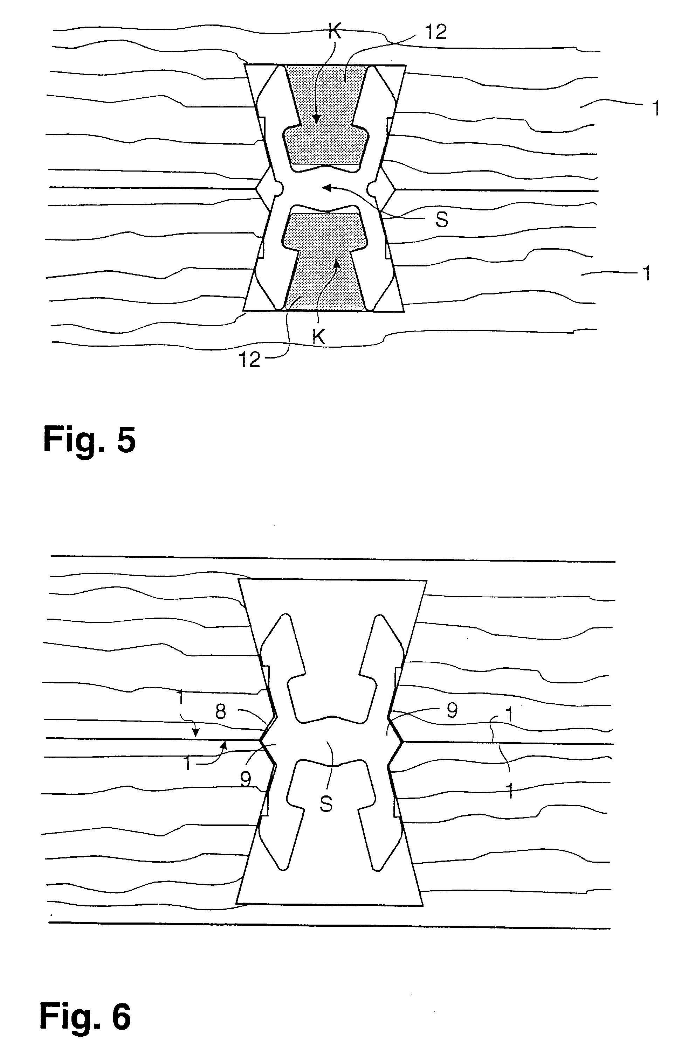

Zur Vergrößerung der Haltewirkung des Verbindungselements V nach Fig.2 kann gemäß Fig.5 die Kehle K mit einem Blockiermittel 12 gefüllt werden, das ein Zusammendrücken der Schenkel 2, 3 bzw. 4, 5 und damit das Auseinanderziehen der Bauteile 1, 1 nach dem Zusammenbau verhindert. Als Blockiermittel 12 eignen sich Material-Profile, die die Kehle K vollständig ausfüllen und aus einem Material bestehen, das nach dem gewünschten Ausziehwiderstand gewählt wird.

Das Blockiermittel 12 kann auch ein Strangpreßprofil sein, das in die Kehle K des Verbindungselements V von einer Stirnseite eingeschoben wird. Ferner kann als Blockiermittel 12 zwischen die zusammenwirkenden Schenkel 2, 3 bzw. 4, 5 des Verbindungselements V ein Federleistenabschnitt (nicht gezeigt) eingespannt werden.

Die Fig.6 zeigt ein Verbindungselement V, das gegenüber demjenigen nach Fig.2 dahingehend abgewandelt ist, daß an den beiden Außenseiten des Steges S keilförmige Justieranschläge 9 ausgebildet sind, die sich im Montagezustand des Verbindungselements V an die Anfasung 8 der einander gegenüberliegenden Bauteile 1,1 anlegen.

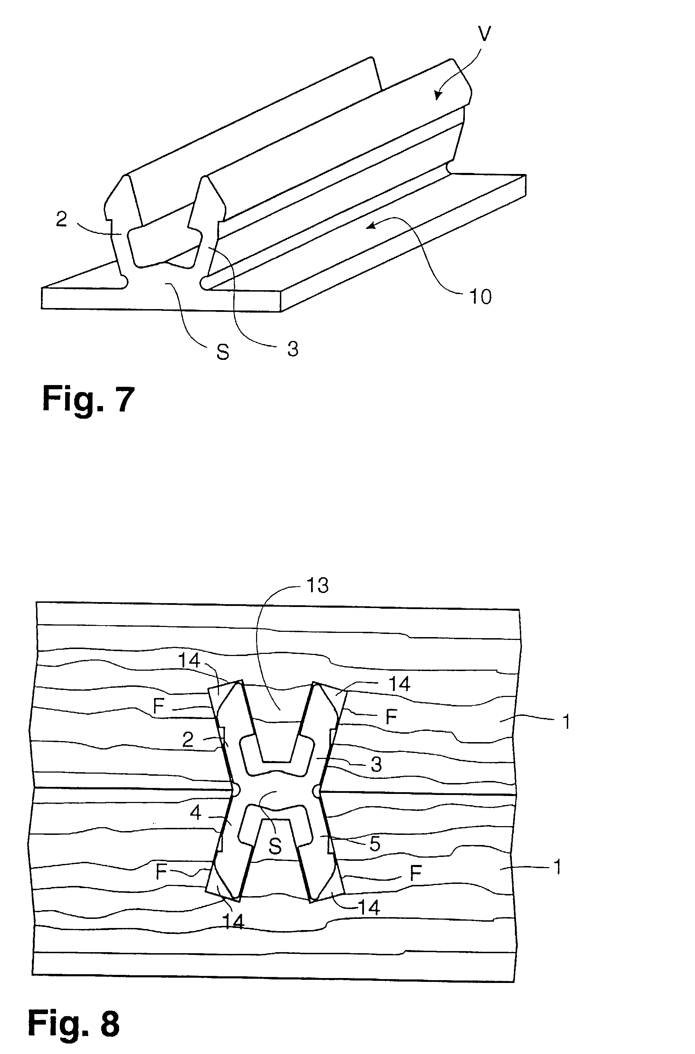

In der Fig.7 ist ein Verbindungselement V gezeigt, das gegenüber den zuvor erläuterten Verbindungselementen V lediglich ein Schenkelpaar 2,3 hat und ebenfalls ein Abschnitt eines Strangpreßprofils aus Kunststoff ist, dessen grundsätzliche Gestaltung dem Strangpreßprofil nach Fig.2 entspricht, d.h. daß sowohl der Steg S als auch die Schenkel 2, 3 und die Schenkelenden entsprechend gestaltet sind. An den Steg S schließt im vorliegenden Fall ein Fixierelement 10 an, das einstückig mit dem Verbindungselement V stranggepreßt wird und zur Fixierung auf einer entsprechenden Unterlage dient.

Anstelle dieses plattenförmigen Fixierelements, das als Klebe- oder Schraubplatte verwendet werden kann, kann der Steg S auf der den Schenkeln 2, 3 gegenüberliegenden Seite mit anders gestalteten Fixierelementen versehen werden, die zum Beispiel auch die Form eines Nagelstiftes oder eines Gewindeabschnittes einer Holzschraube haben können.

Für die Aufnahme der gezeigten Verbindungselemente V kann anstelle einer schwalbenschwanzförmig hinterschnittenen Vollnut N auch eine Nutgestaltung gemäß Fig.8 vorgesehen werden, nach der für jeden einzelnen Schenkel 2, 3, 4, 5 ein eigener Schrägschlitz 14 vorgesehen wird, wobei zwischen den Schräglitzen 14 jeweils ein keilförmiger Steg 13 verbleibt, der sich zwischen die paarweise zusammenwirkenden Schenkel 2,3;4,5 schiebt und letztere keilförmig auseinander und damit gegen die jeweils äußere Flanke der Schrägschlitze 14 preßt.

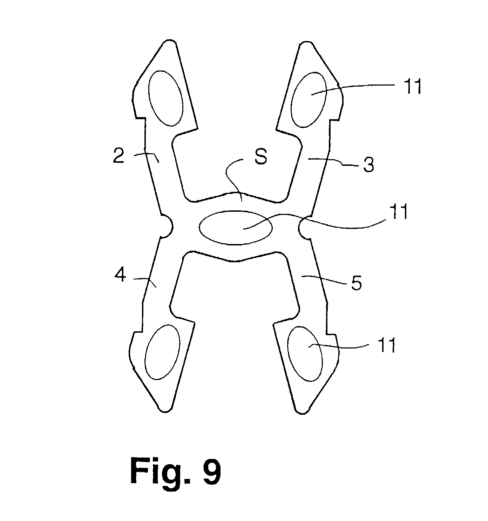

Für den Fall notwendiger großer Abmessungen der Verbindungselemente V, kann gemäß Fig.9 eine Materialminderung dadurch herbeigeführt werden, daß an den pfeilförmigen Enden der Schenkel 2, 3; 4, 5 und im Steg S Ausnehmungen oder Hohlräume 11 vorgesehen werden, die beim Strangpressen zwangsläufig erzeugt werden können.

Die Länge des Verbindungselements V richtet sich nach den zu verbindenden Bauteilen 1 und kann ausgehend von einem Strangprofil an Ort und Stelle durch Abmessen und Abschneiden bestimmt werden. Es ist jedoch auch möglich, Verbindungselemente V mit Einheitslänge oder deren Vielfaches als Handelsgröße zur Verfügung zu stellen.

Zur stirnseitigen Abdeckung (Verblendung) der Nut N kann ein plattenförmiges Abdeckelement (nicht gezeigt) eingesetzt werden, an dem ein Abschnitt des Blockiermittels 12 so angeordnet ist, daß das Blockiermittel 12 in die Kehle K zwischen den Schenkeln 2, 3 bzw. 4, 5 des Verbindungselementes V einsteckbar ist und in dieser Position das plattenförmige Abdeckelement eine stirnseitige Abdeckung der Nut N gewährleistet.

## Patentansprüche

1. Verbindungselement (V) zum Verbinden von genuteten Bauteilen (1), z.B. aus Holz, in Form eines Schienenabschnitts mit konstantem Querschnitt und mindestens zwei als Paar zusammenwirkenden elastischen Schenkeln (2, 3; 4, 5), die von einem sie verbindenden Steg (S) ausgehen und unter Krafteinwirkung zueinander verbiegbar sind, dadurch gekennzeichnet, daß die elastischen Schenkel (2, 3; 4, 5) sowohl im entspannten Ruhezustand als auch im zueinander verbogenen Betriebszustand mit ihrer Außenseite zu den freien Enden (21, 31, 41, 51) hin divergieren und demgemäß so eingerichtet sind, daß sie im montierten Zustand unter Vorspannung an schrägen Seitenwänden (F) einer sich einwärts erweiternden Nut (N) kraftschlüssig anlegbar sind.

2. Verbindungselement (V) nach Anspruch 1 mit vier im wesentliche X-förmig angeordneten, jeweils paarweise zusammenwirkenden elastischen Schenkeln (2, 3; 4, 5), wobei die Winkel zwischen den zusammenwirkenden Schenkeln (2, 3; 4, 5) gleich sind.

3. Verbindungselement (V) nach Anspruch 2, wobei der Winkel (α) zwischen den paarweise zusammenwirkenden elastischen Schenkeln (2, 3; 4, 5) im Bereich von 10° bis 60° liegt.

4. Verbindungselement (V) nach Anspruch 1, welches aus Federstahlblech besteht.

5. Verbindungselement (V) nach Anspruch 4, wobei die Enden (21, 31, 41, 51) der paarweise zusammenwirkenden elastischen Schenkel (2, 3; 4, 5) zueinander abgewinkelt sind.

6. Verbindungselement (V) nach Anspruch 1, welches aus einem Material mit einem Elastizitätsmodul von wenigstens dem 0,2-fachen von Federstahl besteht und als Strangprofil ausgebildet ist, wobei ein Steg (S) die paarweise zusammenwirkenden Schenkel (2, 3; 4, 5) miteinander verbindet.

7. Verbindungselement (V) nach Anspruch 6, wobei die elastischen Schenkel (2, 3; 4, 5) pfeilspitzenförmige Enden (22, 32, 42, 52) mit jeweils einer als Widerhaken wirkenden Kante (23, 33, 43, 53) und jeweils einer Gleit- oder Führungsflanke (24, 34, 44, 54) aufweisen.

8. Verbindungselement (V) nach Anspruch 6 oder 7 mit gelenkartig wirkenden Aussparungen (7) im Bereich der Schenkel (2, 3, 4, 5) an oder neben dem Steg (S), um eine definierte Bewegung der elastischen Schenkel zu begünstigen und gegebenenfalls eines an der Nutkante überstehenden Bearbeitungsgrat aufnehmen zu können.

9. Verbindung von Bauteilen (1) mit einem Verbindungselement (V) nach Anspruch 7, wobei die Nut (N) eine Anfasung (8) zum leichteren Eindringen des Verbindungselementes (V) in die Nut (N) aufweist.

10. Verbindungselement (V) nach Anspruch 7, für eine Verbindung nach Anspruch 9, wobei in der Nähe des Stegs (S) Justieranschläge (9) angeordnet sind, die an der Anfasung (8) anliegen und ein zu tiefes Eindringen des Verbindungselementes (V) in die Nut (N) verhindern.

11. Verbindungselement (V) nach Anspruch 1 mit einem Paar elastischer Schenkel (2, 3), wobei der sie verbindende Steg (S) mit einem Fixierelement (10) zur Fixierung des Verbindungselementes (V) an seiner Unterseite versehen ist.

12. Verbindungselement (V) nach Anspruch 11, wobei das Fixierelement (10) als eine den Steg (S) nach beiden Seiten fortsetzende Platte ausgebildet ist.

13. Verbindungselement (V) nach Anspruch 11, wobei das Fixierelement (10) als Nagelstift ausgebildet ist.

14. Verbindungselement (V) nach Anspruch 11, wobei das Fixierelement (10) als Gewindeabschnitt einer Schraube, beispielsweise einer Holzschraube, ausgebildet ist.

15. Verbindungselement (V) nach Anspruch 6 oder 7, wobei im Materialquerschnitt, vorzugsweise im Steg (5) und in den Schenkelenden, Ausnehmungen (11) vorgesehen sind.

16. Verbindungselement (V) nach einem der vorhergehenden Ansprüche, wobei zwischen den elastischen Schenkeln (2, 3; 4, 5) ein Blockiermittel (12) vorgesehen ist.

17. Verbindungselement (V) nach Anspruch 16, wobei das Blockiermittel (12) ein Vollprofil-Stababschnitt ist, dessen Profilform mit der Querschnittsform der zwischen den Schenkeln (2, 3; 4, 5) verbleibenden Kehle (K) ungefähr übereinstimmt.

18. Verbindungselement (V) nach Anspruch 16, wobei das Blockiermittel (12) ein Strangpreßprofil ist, das in die zwischen den Schenkeln (2, 3; 4, 5) verbleibende Kehle (K) einpreßbar ist.

19. Verbindungselement (V) nach Anspruch 16, wobei das Blockiermittel (12) ein Federleistenabschnitt ist, der in die zwischen den Schenkeln (2, 3; 4, 5) verbleibende Kehle (K) einpreßbar ist.

20. Verbindungselement (V) nach Anspruch 16, wobei das Blockiermittel (12) mit einer Abdeckplatte zur stirnseitigen Abdeckung der Nut (N) verbunden ist.

21. Verbindung mit einem Verbindungselement (V) nach einem der Ansprüche 1 bis 20, wobei die Nut (N) im zu verbindenden Bauteil (1) schwalbenschwanzförmig hinterschnitten ist.

22. Verbindung nach Anspruch 21 mit einem Verbindungselement (V) nach einem der Anspruche 1 - 20, wobei im Querschnitt der ihm zugeordneten Nut (N) des Bauteils (1) ein keilförmiger Steg (13) verbleibt, der zwischen das federnde Schenkelpaar (2, 3; 4, 5) gepreßt ist.

23. Verbindungselement (V) nach Anspruch 1, wobei die Nutseitenwände (F) gekrümmt und die Außenwände der dazugehörigen Schenkelpaare (2, 3; 4, 5) der Krümmung angepaßt sind.

24. Verbindung aus mindestens zwei Bauteilen (1) und einem Verbindungselement (V) nach einem der Ansprüche 1-20 and 23, wobei die Bauteile (1) unter Spannung trennsicher zusammengehalten sind.

## Claims

1. A connecting element (V) for connecting grooved construction members (1), e.g. of wood, in the form of a rail section having a constant cross-section and at least two elastic legs (2, 3; 4, 5) cooperating as a pair, which legs start from a web (S) connecting them and are bendable towards each other by the action of force, characterised in that the elastic legs (2, 3; 4, 5) with their external sides diverge towards their free ends (21, 31, 41, 51) both in their relaxed at-rest state and in their operating state when they are bent towards each other, and accordingly are adapted such that in the mounted state, they are capable of non-positively engaging on oblique side walls (F) of an inwardly widening groove (N) under a biasing force.

2. A connecting element (V) according to claim 1 comprising four elastic legs (2, 3; 4, 5) cooperating in pairs and arranged substantially in the shape of an X, the angles between the cooperating legs (2, 3; 4, 5) being equal.

3. A connecting element (V) according to claim 2, wherein the angle (α) between the elastic legs (2, 3; 4, 5) cooperating in pairs lies in a range of from 10° to 60°.

4. A connecting element (V) according to claim 1, which is comprised of spring-steel sheet or plate.

5. A connecting element (V) according to claim 4, wherein the ends (21, 31, 41, 51) of the elastic legs (2, 3; 4, 5) cooperating in pairs are angled towards each other.

6. A connecting element (V) according to claim 1, which is comprised of a material having a module of elasticity of at least the 0.2-fold of that of spring steel and is designed as an extrusion section, a web (S) connecting the pair-wise cooperating legs (2, 3; 4, 5).

7. A connecting element (V) according to claim 6, wherein the elastic legs (2, 3; 4, 5) have arrowhead-shaped ends (22, 32, 42, 52) each having an edge (23, 33, 43, 53) acting as a barb and each having a sliding or guiding flank (24, 34, 44, 54).

8. A connecting element (V) according to claim 6 or 7 having recesses (7) acting like joints and provided in the region of the legs (2, 3, 4, 5) at or beside the web (S) to assist a defined movement of the elastic legs and, optionally, to be able to accommodate a machining ridge protruding at the groove edge.

9. Connection of construction members (1) comprising a connecting element (V) according to claim 7, wherein the groove (N) has a chamfer (8) for an easier entry of the connecting element (V) into the groove (N).

10. A connecting element (V) according to claim 7, for a connection according to claim 9, wherein adjusting abutments (9) are arranged in the vicinity of the web (S), which adjusting abutments abut on the chamfer (8) and prevent the connecting element (V) from entering too deeply into the groove (N).

11. A connecting element (V) according to claim 1 having a pair of elastic legs (2, 3), wherein the web (S) interconnecting them is provided with a fixing element (10) for fixing the connecting element (V) at its lower side.

12. A connecting element (V) according to claim 11, wherein the fixing element (10) is designed as a plate continuing the web (S) at both sides.

13. A connecting element (V) according to claim 11, wherein the fixing element (10) is designed as a nail pin.

14. A connecting element (V) according to claim 11, wherein the fixing element (10) is designed as a threaded portion of a screw, e.g. of a wood screw.

15. A connecting element (V) according to claim 6 or 7, wherein recesses (11) are provided in the material cross-section, preferably in the web (5) and in the leg ends.

16. A connecting element (V) according to any one of the preceding claims, wherein a blocking means (12) is provided between the elastic legs (2, 3; 4, 5).

17. A connecting element (V) according to claim 16, wherein the blocking means (12) is a full section rod portion whose section shape approximately corresponds to the cross-sectional shape of the channel (K) remaining between the legs (2, 3; 4, 5).

18. A connecting element (V) according to claim 16, wherein the blocking means (12) is an extrusion section capable of being pressed into the channel (K) remaining between the legs (2, 3; 4, 5).

19. A connecting element (V) according to claim 16, wherein the blocking means (12) is a resilient ledge portion capable of being pressed into the channel (K) remaining between the legs (2, 3; 4, 5).

20. A connecting element (V) according to claim 16, wherein the blocking means (12) is connected with a cover plate to cover the groove (N) at its front side.

21. Connection comprising a connecting element (V) according to any one of claims 1 to 20, wherein the groove (N) in the construction member (1) to be connected is undercut in dovetail-shaped manner.

22. Connection according to claim 21, comprising a connecting element (V) according to any one of claims 1 to 20, wherein a wedge-shaped web (13) remains in the cross-section of the associated groove (N) of the construction member (1), which web is pressed between the resilient pair of legs (2, 3; 4, 5).

23. A connecting element (V) according to claim 1, wherein the groove side walls (F) are curved, and the outer walls of the associated pairs of legs (2, 3; 4, 5) are adapted to this curvature.

24. Connection of at least two construction members (1) and a connecting element (V) according to any one of claims 1 to 20 and 23, wherein, under tension, the construction members (1) are held together secure against separation.

## Revendications

1. Elément de liaison (V) destiné à relier des pièces de structure (1), par exemple en bois, munies de rainures, se présentant sous la forme d'un tronçon de rail dont la section transversale est constante et qui comporte au moins deux branches élastiques coopérant par paires (2, 3 ; 4, 5), qui partent d'une âme (S) qui les relie et qui peuvent être courbées l'une vers l'autre sous l'effet d'une force, caractérisé en ce que les branches élastiques (2, 3 ; 4, 5) divergent par leur côté extérieur en direction des extrémités libres (21, 31, 41, 51), aussi bien à l'état de repos, lorsqu'elles sont exemptes de contraintes, qu'à l'état de service, lorsqu'elles sont courbées l'une vers l'autre et, qu'en conséquence de cela, elles sont agencées de façon telle qu'à l'état monté elles peuvent être appliquées en formant une liaison par action de forces, sous précontrainte, contre des parois latérales obliques (F) d'une rainure (N) qui s'élargit vers l'intérieur.

2. Elément de liaison (V) selon la revendication 1, comportant quatre branches élastiques (2, 3 ; 4, 5) disposées sensiblement en forme de X, coopérant dans chaque cas par paires, les angles entre les branches (2, 3 ; 4, 5) qui coopèrent étant égaux.

3. Elément de liaison (V) selon la revendication 2, dans lequel l'angle (α) entre les branches élastiques (2, 3 ; 4, 5) qui coopèrent par paires se situe dans la plage de 10° à 60°.

4. Elément de liaison (V) selon la revendication 1, constitué de tôle d'acier à ressort.

5. Elément de liaison (V) selon la revendication 4, dans lequel les extrémités (21, 31, 41, 51) des branches élastiques qui coopèrent par paires sont repliées en U l'une vers l'autre.

6. Elément de liaison (V) selon la revendication 1, qui est constitué d'un matériau présentant un module d'élasticité qui est d'au moins 0,2 fois celui de l'acier à ressort, et qui est conformé en profilé extrudé, une âme (S) reliant entre elles les branches (2, 3 ; 4, 5) qui coopèrent par paires.

7. Elément de liaison (V) selon la revendication 6, dans lequel les branches élastiques (2, 3 ; 4, 5) présentent des extrémités (22, 32, 42, 52) en forme de pointes de flèche, avec dans chaque cas une arête (23, 33, 43, 53) jouant le rôle de crochet et, dans chaque cas, un flanc de glissement ou de guidage (24, 34, 44, 54).

8. Elément de liaison (V) selon la revendication 6 ou 7, comportant des évidements (7), jouant le rôle d'articulations, dans la zone des branches (2, 3 ; 4, 5) contre l'âme (S) ou à proximité de celle-ci, afin de favoriser un déplacement défini des branches élastiques et de pouvoir, le cas échéant, recevoir une arête d'usinage qui dépasse du bord de la rainure.

9. Liaison de pièces de structure (1) comportant un élément de liaison (V) selon la revendication 7, dans laquelle la rainure (N) présente un chanfreinage (8) destiné à faciliter l'introduction de l'élément de liaison (V) dans la rainure (N).

10. Elément de liaison (V) selon la revendication 7, destiné à une liaison selon la revendication 9, dans lequel sont disposées à proximité de l'âme (S) des butées d'ajustement (9) qui s'appliquent sur le chanfreinage (8) et qui empêchent une pénétration trop profonde de l'élément de liaison (V) dans la rainure (N).

11. Elément de liaison (V) selon la revendication 1, comportant une paire de branches élastiques (2, 3), l'âme (S) qui les relie étant munie d'un élément de fixation (10) destiné à la fixation de l'élément de liaison (V) sur sa face inférieure.

12. Elément de liaison (V) selon la revendication 11, dans lequel l'élément de fixation (10) est constitué par une plaque qui prolonge l'âme (S) des deux côtés.

13. Elément de liaison (V) selon la revendication 11, dans lequel l'élément de fixation (10) a une conformation de tige de clou.

14. Elément de liaison (V) selon la revendication 11, dans lequel l'élément de fixation (10) se présente sous la forme de la partie filetée d'une vis, par exemple d'une vis à bois.

15. Elément de liaison (V) selon la revendication 6 ou 7, dans lequel des évidements (11) sont prévus dans la section transversale du matériau, de préférence dans l'âme (S) et dans les extrémités des branches.

16. Elément de liaison (V) selon l'une des revendications précédentes, dans lequel un moyen de blocage (12) est prévu entre les branches élastiques (2, 3 ; 4, 5).

17. Elément de liaison (V) selon la revendication 16, dans lequel le moyen de blocage (12) est un tronçon de barrette à profil plein dont la forme du profil correspond approximativement à la forme de la section transversale de la gorge (K) qui subsiste entre les branches (2, 3 ; 4, 5).

18. Elément de liaison (V) selon la revendication 16, dans lequel le moyen de blocage (12) est un profilé extrudé qui peut être poussé dans la gorge (K) qui subsiste entre les branches (2, 3 ; 4, 5).

19. Elément de liaison (V) selon la revendication 16, dans lequel le moyen de blocage (12) est un tronçon de profilé élastique qui peut être poussé dans la gorge (K) qui subsiste entre les branches (2, 3 ; 4, 5).

20. Elément de liaison (V) selon la revendication 16, dans lequel le moyen de blocage (12) est relié à une plaque de recouvrement en vue de recouvrir la rainure (N) en bout.

21. Liaison réalisée au moyen d'un élément de liaison (V) selon l'une des revendications 1 à 20, dans laquelle la rainure (N) de la pièce de structure (1) à relier comporte une contre-dépouille en forme de queue d'arronde.

22. Liaison selon la revendication 21, réalisée au moyen d'un élément de liaison (V) selon l'une des revendications 1 à 20, dans laquelle une âme (13) en forme de coin subsiste dans la section transversale de la rainure (N) qui lui est affectée de la pièce de structure (1), et est poussée entre la paire de branches (2, 3 ; 4, 5) élastiques.

23. Elément de liaison (V) selon la revendication 1, dans lequel les parois latérales (F) de la rainure sont courbes et les parois extérieures de la paire de branches (2, 3 ; 4, 5) correspondante sont adaptées à la courbure.

24. Liaison constituée d'au moins deux pièces de structure (1) et d'un élément de liaison (V) selon l'une des revendications 1 à 20 et 23, dans laquelle les pièces de structure (1) sont maintenues ensemble sous contrainte de façon sûre à l'encontre de la séparation.
